# EUROPÄISCHE PATENTSCHRIFT

(11) **EP 0 720 762 B1**
(45) Veröffentlichungstag und Bekanntmachung des Hinweises auf die Patenterteilung: **06.06.2001**
(21) Anmeldenummer: 95913139.2
(22) Anmeldetag: 16.03.1995
(51) Int. Cl.: G06K 7/10

(54) **OPTOELEKTRONISCHE VORRICHTUNG ZUM ERKENNEN VON KONTRASTMARKEN**
OPTO-ELECTRONIC DEVICE FOR RECOGNISING CONTRAST MARKS
DISPOSITIF OPTOELECTRONIQUE POUR IDENTIFIER DES MARQUES DE CONTRASTE

(30) Priorität: 26.04.1994 DE 4414449
(43) Veröffentlichungstag der Anmeldung: 10.07.1996
(73) Patentinhaber: Leuze electronic GmbH + Co., 73277 Owen/Teck (DE)
(72) Erfinder: KEINATH, Armin, D-72581 Dettingen (DE); WÖRNER, Jörg, D-70794 Filderstadt (DE)
(74) Vertreter: Ruckh, Rainer Gerhard, Dr.
(86) Internationale Anmeldenummer: EP9500992
(87) Internationale Veröffentlichungsnummer: WO9529457

(56) Entgegenhaltungen:
- EP-A- 0 036 951
- EP-A- 0 433 593
- EP-A- 0 574 024
- US-A- 4 855 581

## Beschreibung

Die Erfindung betrifft eine Vorrichtung gemäß dem Oberbegriff des Anspruchs 1.

Eine Vorrichtung dieser Art ist aus der EP 0 433 593 A2 bekannt. Die Vorrichtung ist als Barcode-Lesegerät zum Abtasten von Barcode-Symbolen ausgebildet.

Die Barcode-Symbole bestehen aus einer Folge von hellen und dunklen Linienelementen vorgegebener Breite. Die Barcode-Symbole werden von der Vorrichtung mittels eines Sendelichtstrahls, vorzugsweise eines Laserstrahls, abgetastet. Der Sendelichtstrahl weist einen mittleren Durchmesser senkrecht zur Ausbreitungsrichtung entsprechend seiner räumlichen Intensitätsverteilung auf. Bei Laserstrahlen entspricht die räumliche Intensitätsverteilung idealerweise einer Gaußverteilung.

Der Durchmesser des Sendelichtstrahls variiert mit dem Abstand zur Vorrichtung entsprechend der Sendeoptik, die dem Sendeelement vorgeschaltet ist. In der Brennebene des Sendelichtstrahls ist der Durchmesser des Sendelichtstrahls üblicherweise erheblich kleiner als die Breite der Linienelemente. Demzufolge ist die Amplitudenmodulation des Empfangssignals nahezu identisch mit den Breiten der Linienelemente des Barcode-Symbols, so daß dieses von der Vorrichtung sicher erkannt werden kann.

Mit zunehmender Entfernung des Barcode-Symbols von der Brennebene des Sendelichtstrahls wird der Durchmesser des Sendelichtstrahls rasch größer. Sobald der Durchmesser des Sendelichtstrahls von gleicher Größenordnung wie die Breiten der Linienelemente der Barcode-Symbole ist, wird die Modulation des Empfangssignals durch die Breite des Sendelichtstrahls so beeinflußt, daß eine sichere Detektion des Barcode-Symbols erschwert wird oder nicht mehr möglich ist.

Wie in der EP 0 433 593 A2 ausgeführt wird, werden mit größer werdendem Durchmesser des Sendelichtstrahls die hochfrequenten Anteile des modulierten Empfangssignals, die von den schmalen Linienelementen des Barcode-Symbols stammen, zunehmend unterdrückt.

Werden die Amplituden der hochfrequenten Anteile des Empfangssignals im Verhältnis zu den Amplituden der niederfrequenten Anteile des Empfangssignals zu stark unterdrückt, kann das Barcode-Symbol von der Vorrichtung nicht mehr gelesen werden.

Um diesen Effekt zu kompensieren, ist in der Vorrichtung gemäß der EP 0 433 593 A2 ein analoges Filter vorgesehen, mit dem das analoge Empfangssignal so gefiltert wird, daß die hochfrequenten Komponenten stärker als die niederfrequenten Komponenten verstärkt werden.

Zur Festlegung der Übertragungscharakteristik des Filters werden vier Frequenzen f₀, f₁, f₂ und f₃ definiert.

In den Bereichen zwischen zwei benachbarten Frequenzen wird jeweils ein bestimmter Verstärkungsfaktor gewählt,wobei die Verstärkungsfaktoren mit zunehmender Frequenz größer werden. Die Übertragungscharakteristik des Filters kann für einen bestimmten Durchmesser des Sendelichtstrahls fest eingestellt werden. Alternativ kann die Übertragungsfunktion des Filters durch Verschieben der Frequenzen f₀, f₁, f₂ und f₃ verändert werden.

Diese Verschiebung erfolgt zweckmäßigerweise in Abhängigkeit der Frequenz die den schmalen Linienelementen des Barcode-Symbols entspricht.

Ein wesentlicher Nachteil dieser Vorrichtung besteht in der groben Einteilung des Frequenzspektrums des Empfangssignals. Dadurch kann der Einfluß des Sendelichtstrahldurchmessers auf die Modulation des Empfangssignals nur unvollständig erfaßt werden. Entsprechend kann das Empfangssignal mittels des analogen Filters nur begrenzt optimiert werden.

Ein weiterer Nachteil dieser Vorrichtung besteht darin, daß die Übertragungsfunktion des analogen Filters nur für einen bestimmten Abstand optimiert werden kann. Bei verschiedenen Leseabständen müssen die Frequenzen f₀, f₁, f₂ und f₃ verändert werden, wobei die Änderung der Frequenzen mittels eines zusätzlichen Sensorsystems erfolgt, das beispielsweise die Signal-Frequenzen der von den schmalen Linien stammenden Empfangssignale mißt. Dies bedeutet einen beträchtlichen zusätzlichen Schaltungsaufwand.

Der Erfindung liegt die Aufgabe zugrunde, eine Vorrichtung der eingangs genannten Art so auszubilden, daß die Marken mit möglichst geringem apparativem Aufwand innerhalb eines großen Lesebereichs sicher erkannt werden können.

Zur Lösung dieser Aufgabe sind die Merkmale des Anspruchs 1 vorgesehen.

Vorteilhafte Ausführungsformen und zweckmäßige Weiterbildungen der Erfindung sind in den Ansprüchen 2 - 10 beschrieben.

Der Grundgedanke der Erfindung besteht darin, daß in das digitale Filter in vorgegebenen Zeitintervallen nacheinander verschiedene Koeffizientensätze eingelesen werden. Jeder der Koeffizientensätze ist so gewählt, daß mit der Vorrichtung in einem vorgegebenen Abstandsbereich von der Vorrichtung, dem sogenannten Tiefenschärfebereich, die Marken sicher erkannt werden können.

Vorzugsweise erfolgt die Umschaltung der Koeffizientensätze des digitalen Filters periodisch, wobei die Umschaltfrequenz der Koeffizientensätze der Abtastrate der Ablenkeinheit entspricht. Die Abtastraten liegen vorzugsweise in der Größenordnung von 10⁻³ sec. Dies bedeutet, daß sich die Marken im Vergleich zur Abtastgeschwindigkeit nur sehr langsam bewegen, so daß eine Marke in einer bestimmten Position mit unterschiedlichen Einstellungen des digitalen Filters vermessen wird.

Üblicherweise werden an Gegenständen angeordnete Marken, die beispielsweise auf Fließbändern transportiert werden, mit Geschwindigkeiten im Bereich einiger m/sec an der Vorrichtung vorbeibewegt.

Für jede der verschiedenen Einstellungen des digitalen Filters ergibt sich ein bestimmter Lesebereich. Zur Identizifierung der Marke braucht diese lediglich bei einer Einstellung der Koeffizienten des Filters erkannt werden, da sich die Position der Marke während der Einzelmessungen nicht ändert. Im Ergebnis addieren sich die Tiefenschärfebereiche für die Einzelmessungen zu einem Gesamt-Tiefenschärfebereich, der erheblich größer als die Einzelbereiche ist.

Zweckmäßigerweise werden nur zwei verschiedene Koeffizientensätze verwendet, so daß eine kurze Periodendauer der Umschaltung der Koeffizientensätze gewährleistet ist. Die Koeffizientensätze sind so gewählt, daß die daraus resultierenden Tiefenschärfebereiche nahtlos aneinander anschließen, so daß sich die Einzelbereiche zu einem lückenlosen Gesamt-Tiefenschärfebereich addieren, innerhalb dessen die Marken sicher erkannt werden können.

Jeder Koeffizientensatz des digitalen Filters ist so gewählt, daß die Störungen des Empfangssignals, die durch bauteilbedingte Störungen und durch den endlichen Durchmesser des Sendelichtstrahls in einem vorgegebenen Abstandsbereich von der Vorrichtung kompensiert werden.

Hierfür ist dem Empfangselement ein n-bit Analog-Wandler nachgeschaltet, der das analoge Empfangssignal in ein digitales Signal umwandelt. Die Auflösung des Analog-Digitalwandlers d.h. dessen Wortbreite ist zweckmäßigerweise möglichst groß zu wählen. Dadurch wird ein Informationsverlust bei der Wandlung des Analogsignals in ein Digitalsignal weitgehend vermieden.

Die Kompensation der Verzerrungen des Empfangssignals erfolgt durch eine geeignete Wahl der Übertragungsfunktion des digitalen Filters, dem das digitalisierte Empfangssignals zugeführt wird.

Bei der Bestimmung der Übertragungsfunktion des digitalen Filters werden die Übertragungsfunktionen der signalverzerrenden Bauelemente, insbesondere des Empfangselements, sowie das Frequenzspektrum der räumlichen Intensitätsverteilung des Sendelichtstrahls berücksichtigt. Dadurch können die Störeinflüsse über den gesamten Frequenzbereich genau erfaßt und kompensiert werden, wodurch die Geometrie der Hell-Dunkelflächen der Marken sehr präzise aus den Amplitudenverlauf des Empfangssignals rekonstruiert werden kann.

Die Koeffizientensätze des digitalen Filters werden zweckmäßigerweise über ein rechnergestütztes Variationsverfahren erhalten. Dabei erfolgt die Variation der Koeffizienten des Filters bis das Empfangssignal innerhalb einer vorgegebenen Genauigkeit mit dem tatsächlichen Kontrastmuster der Marken in dem jeweils vorgegebenen Lesebereich übereinstimmt.

Die Erfindung wird im nachstehenden anhand der Zeichnungen erläutert. Es zeigen:
- Fig. 1:: einen Prinzipaufbau der optoelektronischen Vorrichtung,
- Fig. 2:: ein Blockschaltbild der Auswerteeinheit der optoelektronischen Vorrichtung,
- Fig. 3:: ein Impulsdiagramm der Signalauswertung in der Schwellwerteinheit mit:
a) Darstellung eines Barcode-Symbols,
b) Empfangssignal am Eingang der Schwellwerteinheit,
c) differenziertes Empfangssignal,
d) binäre Empfangssignalfolge am Ausgang der Schwellwerteinheit,
- Fig. 4:: ein Blockschaltbild des FIR-Filters,
- Fig. 5:: Ablaufschema zur Bestimmung der Koeffizientensätze des digitalen Filters,
- Fig. 6:: Zeitabhängigkeit der Koeffizienten des digitalen Filters während der Variation der Koeffizienten,
- Fig. 7:: a) erster Koeffizientensatz des digitalen Filters nach Ablauf der Variation der Koeffizienten,
b) zweiter Koeffizientensatz des digitalen Filters nach Ablauf der Variation der Koeffizienten,
- Fig. 8:: a) Übertragungsfunktion für den ersten Koeffizientensatz des optimierten digitalen Filters,
b) Übertragungsfunktion für den zweiten Koeffizientensatz des optimierten digitalen Filters,
- Fig. 9:: a) Dekodiersicherheit der Vorrichtung vor bzw. nach Optimierung des ersten Koeffizientensatzes des digitalen Filters,
b) Dekodiersicherheit der Vorrichtung vor bzw. nach Optimierung des zweiten Koeffizientensatzes des digitalen Filters.

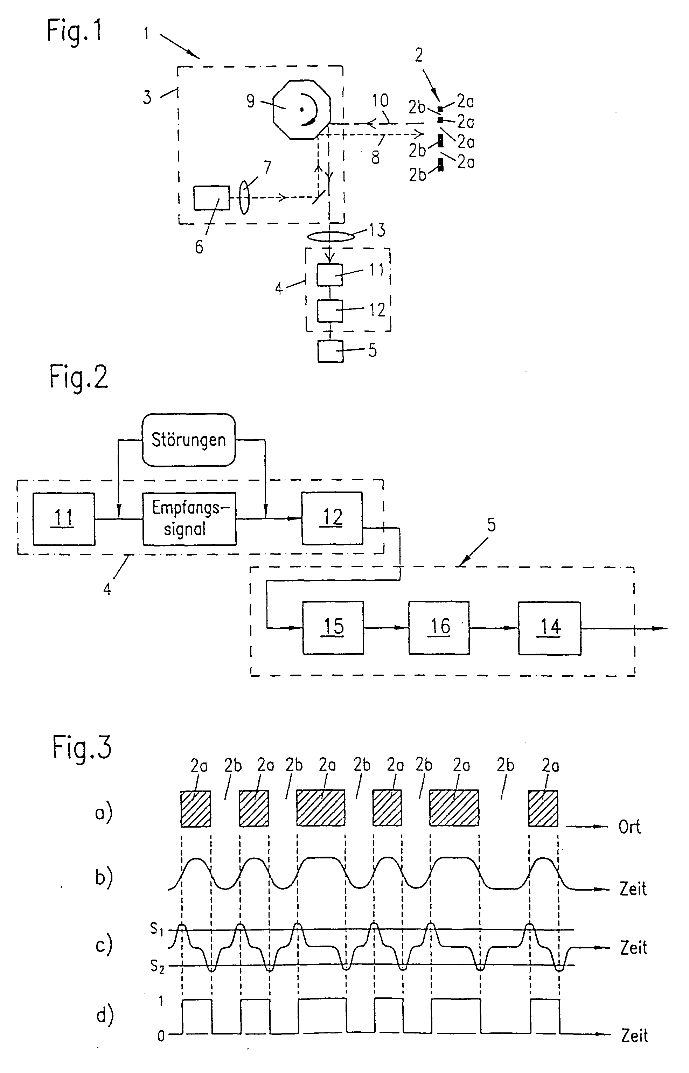

In Fig. 1 ist der prinzipielle Aufbau einer optoelektronischen Vorrichtung 1 zum Erkennen von mit definierten Kontrastmustern versehenen Marken dargestellt. Prinzipiell können die Marken beliebige Folgen und Formen von einander angrenzenden Hell- Dunkelflächen, vorzugsweise Schwarz-Weiß-Flächen, aufweisen. Im folgenden soll die Erfindung für den Fall erläutert werden, daß die Marken von Barcode-Symbolen 2 gebildet sind. Die Barcode-Symbole 2 bestehen im wesentlichen aus einer Folge von schwarzen und weißen Linienelementen 2a, b definierter Länge und Breite.

Die optoelektronische Vorrichtung 1 besteht im wesentlichen aus einem Sendeelement 3, einem Empfangselement 4 sowie einer Auswerteeinheit 5. Das Sendeelement 3 besteht aus einem Sender 6, vorzugsweise einer Laserdiode, sowie aus einer dem Sender 6 vorgeschalteten Sendeoptik 7 zur Fokussierung des Sendelichtstrahls 8. Der fokussierte Sendelichtstrahl 8 wird über eine Ablenkeinheit 9, die im vorliegenden Ausführungsbeispiel von einem rotierenden Polygonspiegelrad gebildet ist, abgelenkt und über das zu detektierende Barcode-Symbol 2 geführt. Die Drehachse des Polygonspiegelrads ist senkrecht zur in Fig. 1 dargestellten Äquatorialebene des Polygonspiegelrads angeordnet.

Das vom Barcode-Symbol 2 reflektierte Empfangslicht 10 wird über das Polygonspiegelrad zum Empfangselement 4 geführt. Das Empfangselement 4 besteht aus einer Fotodiode 11, in der das Empfangslicht 10 in ein elektronisches Empfangssignal gewandelt wird, und einem dieser nachgeschalteten Verstärker 12. Zur Verbesserung der Nachweisempfindlichkeit ist dem Empfangselement 4 eine Empfangsoptik 13 vorgeschaltet.

Das am Ausgang des Empfangselements 4 anstehende Empfangssignal wird der Auswerteeinheit 5 zugeführt.

Aus Fig. 3 ist das Prinzip der Auswertung der Empfangssignale ersichtlich. In Fig. 3a ist ein Barcode-Symbol 2 mit einer Folge von schwarzen und weißen Linienelementen 2a, b dargestellt. Falls der Durchmesser des Sendelichtstrahls 8 auf dem Barcode-Symbol 2 wesentlich kleiner als die kleinste Breite eines Linienelements 2a, b ist, wird der Sendelichtstrahl 8 durch die Reflexion von dem Barcode-Symbol 2 wie in Fig. 3b dargestellt amplitudenmoduliert.

Falls im Empfangselement 4 keine Verzerrungen oder Verfälschungen des Empfangssignals erfolgt, entspricht der in Fig. 3b dargestellte Kurvenverlauf dem am Ausgang des Empfangselements 4 anstehenden Empfangssignal.

Die Bestimmung der Breite der einzelnen Linienelemente 2a, b des Barcode-Symbols 2 in der Auswerteeinheit 5 erfolgt zweckmäßigerweise nach dem Wendepunktverfahren.

In einem ersten Schritt wird das Empfangssignal differenziert (Fig. 3c).Anschließend werden die Extrema des differenzierten Empfangssignals bestimmt, die den Wendepunkten des Empfangssignals entsprechen. Diese Wendepunkte wiederum definieren die Übergänge von einem schwarzen zu einem weißen Linienelement 2a, b bzw. umgekehrt.

Zur Bestimmung der Wendepunkte des Empfangssignals wird das differenzierte Empfangssignal mit vorzugsweise zwei Schaltschwellen S₁ und S₂ (Fig. 3c) in eine binäre Signalfolge (Fig. 3d) umgewandelt. Die Dauer der Zustände '0' und '1' der binären Signalfolge ist ein Maß für die Breite der Linienelemente 2a, b des Barcode-Symbols 2. Die Dauer der Zustände '0' und '1' kann über einen taktgesteuerten Zähler einfach erfaßt werden.

Mit größer werdendem Durchmesser des Sendelichtstrahls 8 bzw. zunehmenden Signalverzerrungen im Empfangselement 4 werden auch die Kantenfehler grösser, d.h. die Wendepunkte des Empfangssignals fallen mit den Ortskoordinaten der Schwarz-Weiß-Übergänge des Barcode-Symbols 2 nicht mehr zusammen. Im Extremfall kann dadurch ein Barcode-Symbol 2 nicht mehr erkannt werden.

Ein Maß für die Abweichung des Empfangssignals vom tatsächlichen Kontrastmuster bildet die sogenannte Dekodiersicherheit DS.

Bei einem idealen Barcode-Lesegerät ohne signalverzerrende Bauelemente und mit einem unendlich scharf fokussierten Sendelichtstrahl 8 ergibt sich eine vollkommene Übereinstimmung der Lagen der Wendepunkte des Empfangssignals und der Lagen der Schwarz-Weiß-Übergänge des Barcode-Symbols 2. Dies entspricht dem Wert DS = 1. Ein Barcode-Symbol 2 kann von der Vorrichtung 1 mit Sicherheit erkannt werden.

Mit größer werdenden Störeinflüssen werden die Unterschiede zwischen den Lagen der Wendepunkte des Empfangssignals und den Lagen der Schwarz-Weiß-Übergänge des Barcode-Symbols 2 größer, d. h. die Dekodiersicherheit DS wird kleiner.

Bei einem realen Barcode-Lesegerät können die bauteilbedingten Störeinflüsse oder der Durchmesser des Sendelichtstrahls 8 so groß sein, daß Linienelemente 2a, b des Barcode-Symbols 2 mit unterschiedlichen Breitenverhältnissen zu einem Empfangssignal mit äquidistanten Wendepunktabständen führen. In diesem Fall können Linienelemente 2a, b unterschiedlicher Breite nicht mehr erkannt werden. Die Dekodiersicherheit beträgt in diesem Fall DS = 0.

Zur Elimination dieser Signalverzerrungen d. h. zur Erhöhung der Dekodiersicherheit ist in der Auswerteeinheit 5 der Schwellwerteinheit 14 der Analog-Digitalwandler 15 und das digitale Filter 16 vorgeschaltet.

Der n-bit-Analog-Digitalwandler 15 weist eine Wortbreite im Bereich von n = 8 - 12 auf. Im vorliegenden Ausführungsbeispiel wird ein 10-bit-Analog-Digitalwandler 15 verwendet. Dadurch kann das analoge Empfangssignal mit einer hohen Auflösung in ein digitalisiertes Empfangssignal gewandelt werden.

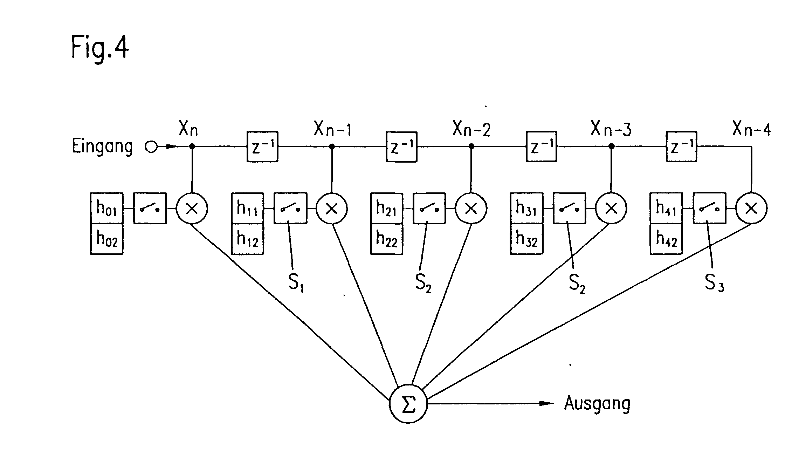

Das digitale Filter 16 ist von einem FIR-Filter gebildet. Der Aufbau des FIR-Filters ist in Fig. 4 dargestellt. Die Ausgangsgröße yₙ des FIR-Filters hängt von der Eingangsgröße xₘ (m = n, n - 1, n - 2 ..., n-M) zu verschiedenen Zeitpunkten m ab.

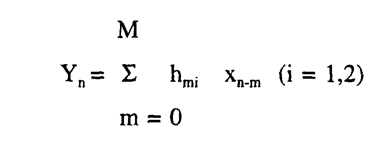

Die in Fig. 4 dargestellte Variable z ist die zur Zeitvariablen n konjungierte Variable im Frequenzbereich. Die Größe z⁻¹ stellt den Betrag der Verzögerung zwischen zwei Verknüpfungspunkten, z.B. xₙ und xₙ₋₁, dar. Die Symbole X bzw. Σ charakterisieren eine multiplikative bzw. additive Verknüpfung, die durch einen Multiplizierer bzw. einen Addierer realisiert sind.

Die Gewichtung der Eingangsgröße erfolgt mit einstellbaren Koeffizienten hₘᵢ. Der Index m gibt den Zeitrang des Filters 16 an. Im vorliegenden Fall wird ein Filter 18. Grades verwendet, d.h. die Anzahl der Koeffizienten m des Filters 16 beträgt M = 18, der Index m variiert demzufolge im Bereich m = 0, 1, 2 ...17.

Der Index i dient zur Unterscheidung der verschiedenen Koeffizientensätze. Im vorliegenden Ausführungsbeispiel werden zwei verschiedene Koeffizientensätze (i = 1,2) verwendet.

Jeder der Koeffizienten hₘᵢ ist in einem Speicherelement im digitalen Filter 16 gespeichert. Die Speicherelemente sind in Fig. 4 durch die Koeffizienten hₘᵢ selbst gekennzeichnet.

Die Ausgänge der Speicherelemente für die Koeffizienten hₘᵢ von verschiedenen Koeffizientensätzen i, die demselben Zeitrang m zugeordnet sind, sind an einen Schalter Sₘ angeschlossen. Der Ausgang des Schalters Sₘ wiederum ist an den Multiplizierer X angeschlossen, der dem Zeitrang m im Netzwerk des digitalen Filters zugeordnet ist.

Durch Umschalten der Schalter Sₘ (m = 0, 1, 2 ... 17) werden nacheinander die verschiedenen Koeffizientensätze hₘᵢ (i = 1,2) in das Netzwerk des digitalen Filters 16 eingelesen.

Diese Umschaltung erfolgt periodisch über eine nicht dargestellte Rechnereinheit. Dabei ist die Umschaltfrequenz der Koeffizienten hₘᵢ gleich der Abtastrate der Ablenkeinheit. Somit wird die Vorrichtung bei aufeinanderfolgenden Abtastzyklen mit unterschiedlichen Koeffizientensätzen betrieben.

Die Abtastrate liegt in der Größenordnung von 10⁻³ sec. Durch diese schnelle Umschaltung der Koeffizienten ist gewährleistet, daß jede Marke in einer vorgegebenen Position mit beiden Koeffizientensätzen vermessen wird.

Das digitalisierte und gefilterte Empfangssignal wird der Schwellwerteinheit 14 zugeführt und dort in eine binäre Signalfolge umgewandelt.

Die Übertragungsfunktion ist für jeden Koeffizientensatz des digitalen Filters 16 so ausgestaltet, daß Signalverzerrungen des Empfangssignals, die durch Bauelemente oder durch den endlichen Durchmesser des Sendelichtstrahls 8 hervorgerufen werden, eliminiert werden können.

Diese Störgrößen sind jedoch keine Konstanten, sondern hängen von mehreren externen Faktoren ab. Der Einfluß des Durchmessers des Sendelichtstrahls 8 auf die Dekodiersicherheit hängt vom Verhältnis des Durchmessers zu den Breiten der Linienelemente 2a, b des Barcode-Symbols 2 ab. Ferner hängt der Durchmesser des Sendelichtstrahls 8 vom Abstand d des Barcode-Symbols 2 zur Vorrichtung 1 ab. Schließlich beeinflußt die Ausbildung der signalverzerrenden Bauelemente die Größe der Störsignale.

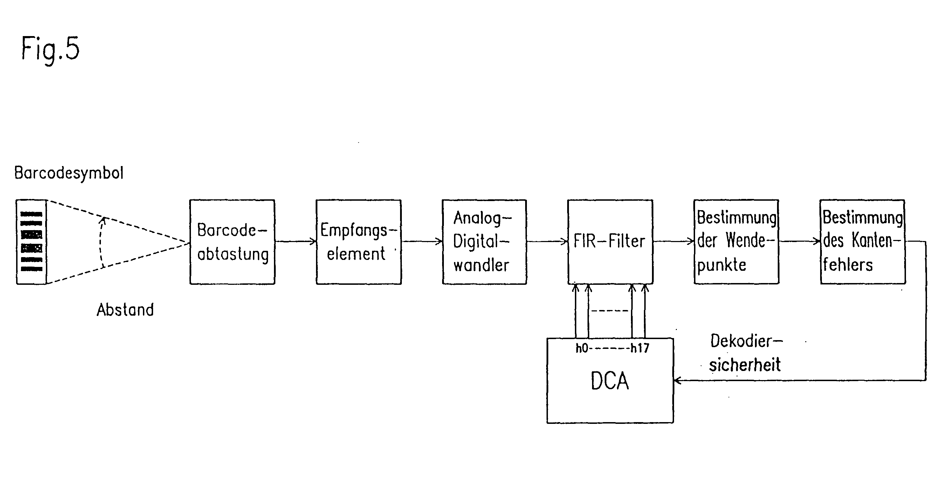

Bei der Bestimmung der Koeffizienten hₘᵢ des digitalen Filters 16 sind diese Einflußgrößen im Rahmen eines Gesamtmodells für die Vorrichtung 1 berücksichtigt, wobei für die Bestimmung jedes Koeffizientensatzes ein separates Gesamtmodell entworfen wird. Auf der Basis dieses Gesamtmodells werden die Koeffizienten über eine systematische Variation ermittelt. Das Ablaufschema zur Bestimmung der Koeffizienten hₘᵢ des digitalen Filters 16 ist in Fig. 5 dargestellt.

Das Barcode-Lesegerät ist an eine nicht dargestellte Rechnereinheit angeschlossen und detektiert in vorgegebenen Abständen d Barcode-Symbole 2, die Linienelemente 2a, b mit definierten Breitenverhältnissen aufweisen.

Das durch die Abtastung des Barcode-Symbols 2 auf das Empfangselement 4 auftreffende Empfangslicht 10 wird dort in das Empfangssignal gewandelt. Dieses Empfangssignal weist Signalverzerrungen auf, die durch das Empfangselement 4 und durch den endlichen Durchmesser des Sendelichtstrahls 8 verursacht werden.

Dadurch enthält das Empfangssignal nicht nur Informationen über die Ausgestaltung des Barcode-Symbols 2 welches abgetastet wurde, sondern auch Informationen über den Sendelichtstrahl 8 und das Empfangselement 4. Dieses Empfangssignal wird im Analog-Digitalwandler 15 digitalisiert, dem FIR-Filter und schließlich der Rechnereinheit zugeführt. Zudem ist das Kontrastmuster des Barcode-Symbols 2 in der Rechnereinheit gespeichert.

In der Rechnereinheit werden die Lagen der Wendepunkte des Empfangssignals ermittelt und mit den Positionen der Übergänge von schwarzen zu weißen Linienelementen 2a, b verglichen. Aus der Abweichung dieser Positionen wird die Dekodiersicherheit der Vorrichtung 1 ermittelt.

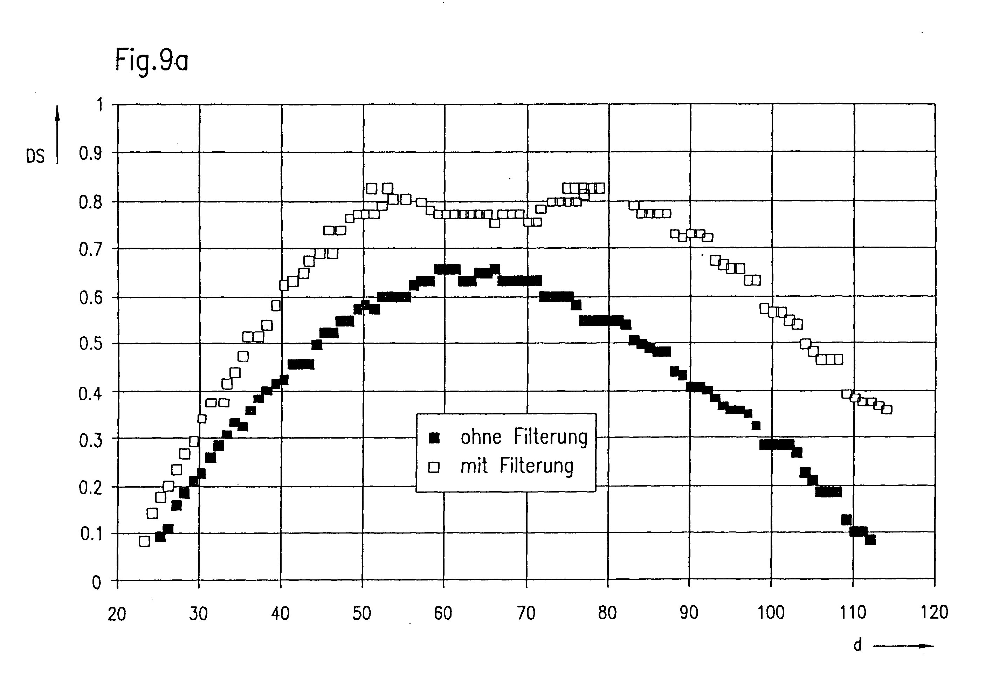

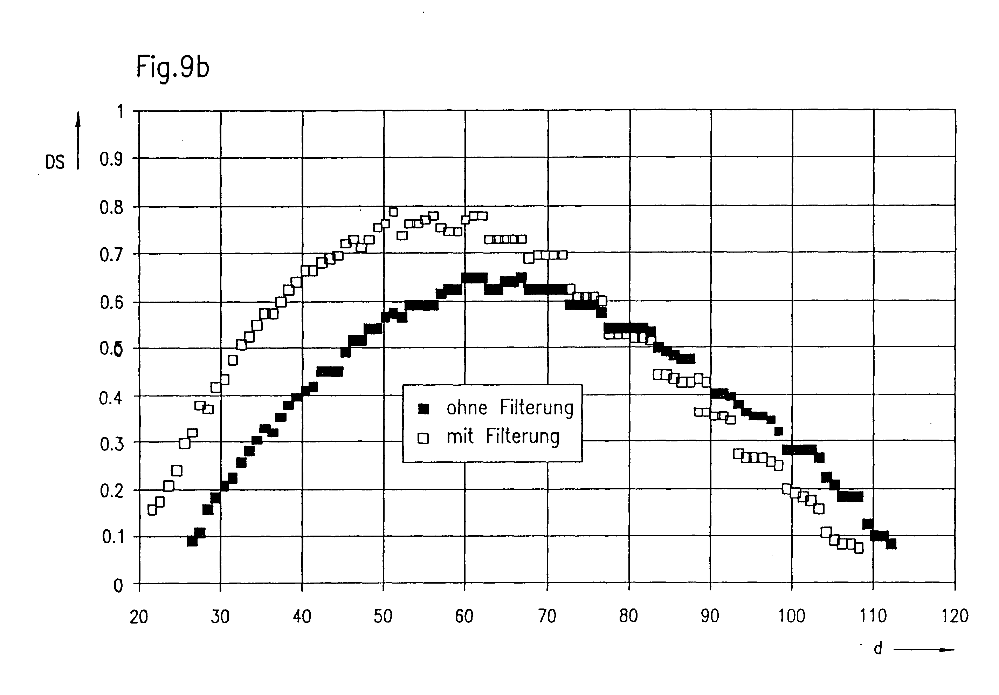

Dieses Verfahren wird für verschiedene Leseabstände wiederholt, so daß die Dekodiersicherheit in Abhängigkeit des Leseabstands d in der Rechnereinheit vorliegt. Die so ermittelte Dekodiersicherheit in Abhängigkeit des Leseabstands ist in Fig. 9 dargestellt.

Die beiden Koeffizientensätze hₘᵢ (i = 1,2) des digitalen Filters werden für verschiedene Leseabstände getrennt optimiert.Demzufolge wird die Dekodiersicherheit für die verschiedenen Koeffizientensätze für verschiedene Bereiche der Leseabstände ermittelt (untere Kurven in Fig. 9a, b).

Die Koeffizienten hₘᵢ des Filters 16 sind auf vorgegebene Werte eingestellt, die die Anfangsbedingung für das nachfolgende Variationsverfahren bilden. Zweckmäßigerweise wird als Anfangsbedingung der Wert eines der Koeffizienten hₘᵢ des Filters 16 auf 1 gesetzt, während die restlichen Koeffizienten hₘᵢ den Wert 0 annehmen.

Die Variation der Koeffizienten hₘᵢ des FIR-Filters erfolgt in der Rechnereinheit nach dem Verfahren der Entwurfszentrierung (DCA = design centering analysis). Die zuvor ermittelte Dekodiersicherheit in Abhängigkeit des Abstands d wird als Eingangsgröße verwendet. Mit dieser Information werden die Koeffizienten hₘᵢ des FIR-Filters nach dem Zufallsprinzip geändert. Dann werden diejenigen Parametersätze gespeichert, die zu einer Dekodiersicherheit führen, die einen vorgegebenen Mindestwert überschreiten.

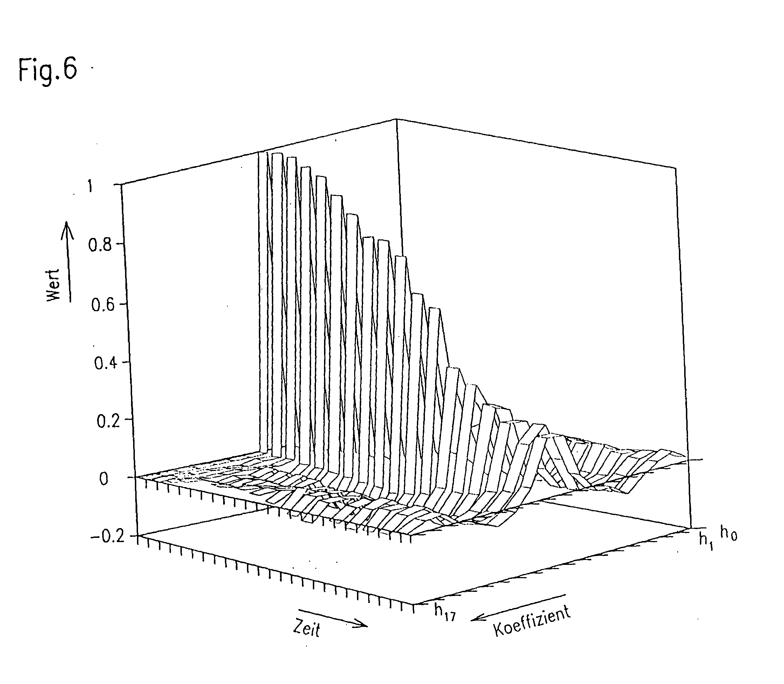

Dieses Verfahren wird in mehreren Iterationsschritten wiederholt, wobei jeweils die in der Rechnereinheit ermittelte Dekodiersicherheit des vorher gehenden Iterationsschrittes für den aktuellen Iterationsschritt verwendet wird. Die Iteration wird dann abgebrochen, wenn die Dekodiersicherheit einen vorgegebenen Sollwert überschreitet. Die zeitliche Veränderung der Koeffizienten des FIR-Filters während der einzelnen Iterationsschritte ist schematisch in Fig. 6 dargestellt.

Die Optimierung der Koeffizientensätze des Filters 16 erfolgt nicht nur für einen Leseabstand, sondern für den jeweils vorgegebenen Abstandsbereich, wobei der Sollwert für die Dekodiersicherheit für jeden Leseabstand erreicht werden muß.

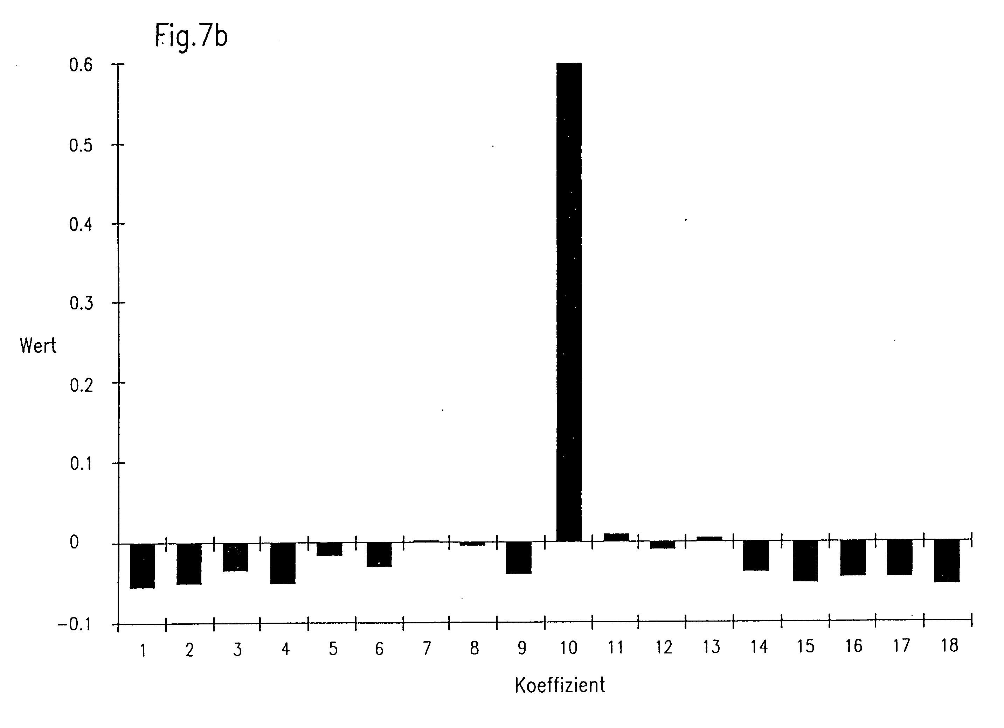

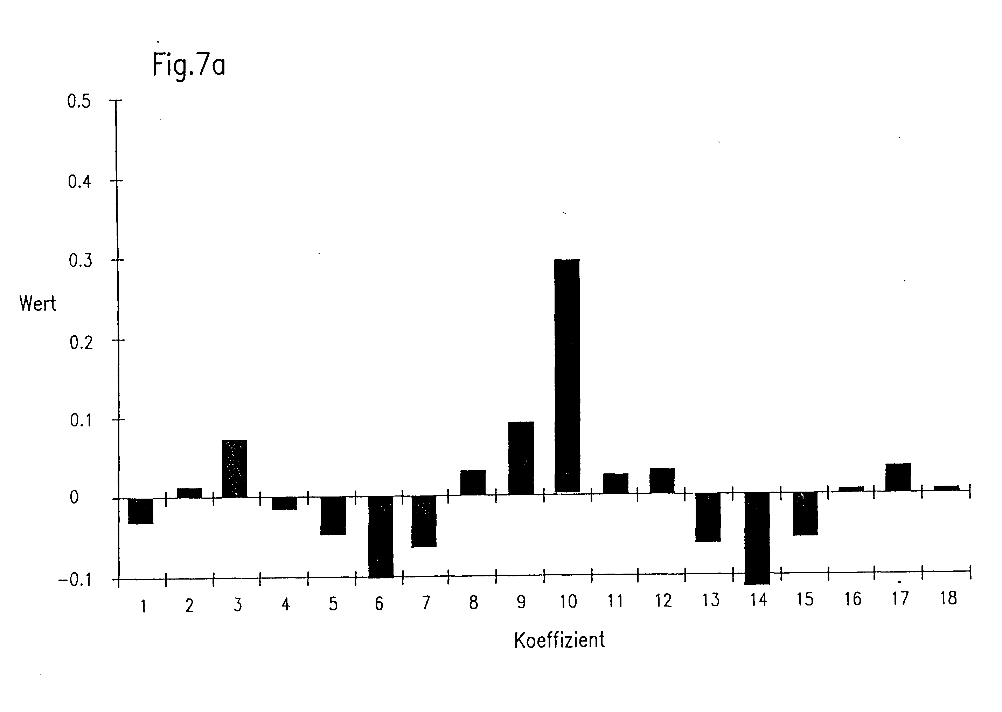

In Fig. 7a, b sind die optimierten Sätze der Koeffizienten hₘᵢ des digitalen Filters 16 dargestellt. Die Koeffizienten sind bezüglich des Mittelpunkts bzw. der Mittelsenkrechten asymmetrisch ausgebildet. Durch den asymmetrischen Anteil der Koeffizienten hₘᵢ werden Phasenverzerrungen des Empfangssignals die durch das Empfangselement 4 bewirkt werden, eliminiert.

Durch den symmetrischen Anteil der Koeffizienten hₘᵢ werden Amplitudenverzerrungen des Empfangssignals, die durch den endlichen Durchmesser des Sendelichtstrahls 8 und das Empfangselement 4 hervorgerufen werden, eliminiert.

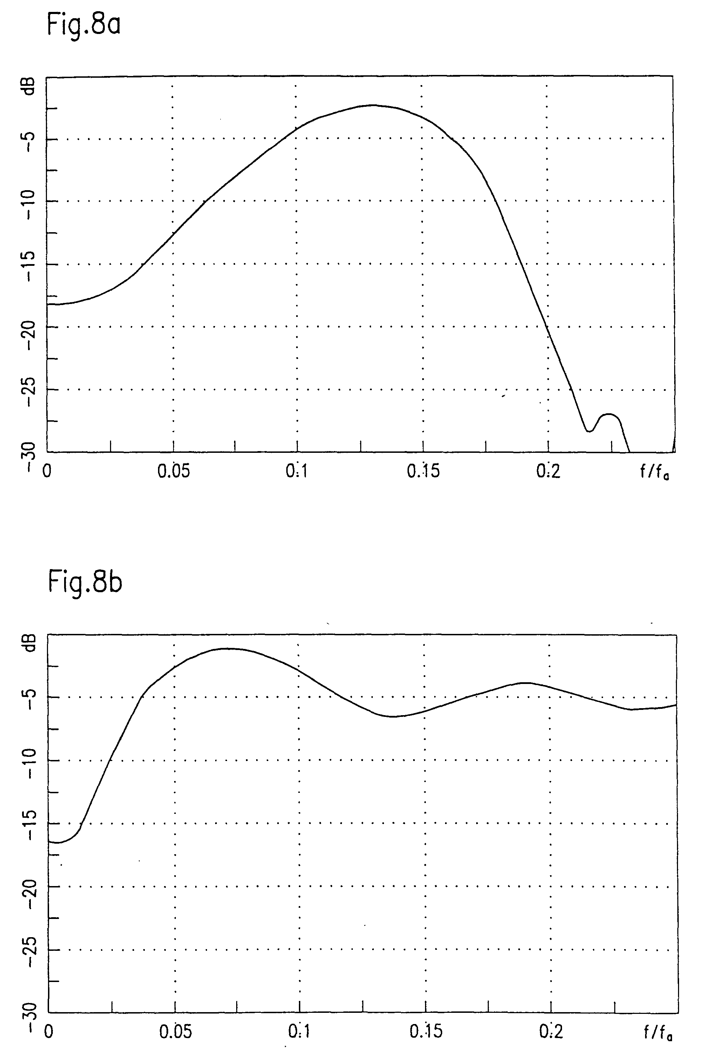

In Fig. 8a, b sind die Übertragungsfunktionen des digitalen Filters 16 dargestellt, die sich aus den Fouriertransformierten der Koeffizientensätze des digitalen Filters 16 gemäß Fig. 7a, b ergeben. Die Frequenz fₐ beträgt im vorliegenden Ausführungsbeispiel fₐ = 10 MHz.

Die Übertragungsfunktionen entsprechen im wesentlichen den Inversen der Frequenzspektren der räumlichen Verteilungen des Sendelichtstrahls 8 in den vorgegebenen Bereichen der Leseabstände, die im wesentlichen Gaußcharakteristiken entsprechen. Abweichungen hiervon rühren von den Signalverzerrungen durch das Empfangselement 4.

Dies bedeutet, daß durch die experimentelle Erfassung aller externer Systemgrößen im gesamten Frequenzbereich deren Einfluß auf das Empfangssignal genau erfaßt und durch das Variationsverfahren eliminiert werden kann.

In Fig. 9a, b sind die mit den optimierten Koeffizientensätzen erhaltenen Werte für die Dekodiersicherheit dargestellt (obere Kurven). Für den ersten Koeffizientensatz ergibt sich für Leseabstände im Bereich 36 cm < d < 104 cm eine Dekodiersicherheit, die oberhalb von 0,6 liegt. Oberhalb dieses Grenzwertes können die Barcode-Symbole 2 sicher erkannt werden (Fig. 9a).

Für den zweiten Koeffizientensatz ergibt sich für Leseabstände im Bereich 30 cm < d < 87 cm eine Dekodiersicherheit, die oberhalb von 0,6 liegt.

Durch die Umschaltung der Koeffizientensätze im digitalen Filter 16 wird der Tiefenschärfebereich auf 30 cm < d < 104 vergrößert.

Nach erfolgter Optimierung der Koeffizienten hₘᵢ des digitalen Filters 16 wird die Rechnereinheit von der Vorrichtung 1 getrennt. Während des Betriebs der Vorrichtung 1 werden die optimierten Koeffizientensätze hₘᵢ des digitalen Filters 16 beibehalten. Eine Nachregelung der Koeffizienten hₘᵢ des digitalen Filters 16 und damit der Übertragungsfunktionen ist nicht notwendig, da die Koeffizienten hₘᵢ für verschiedene Leseabstände d und Barcode-Symbole 2 optimiert wurden und durch die Umschaltung zwischen den Koeffizientensätzen ein beträchtlich vergrößerter Tiefenschärfebereich erhalten wird.

## Patentansprüche

1. Optoelektronische Vorrichtung zum Erkennen von mit definierten Kontrastmustern versehenen Marken, mit einem einen Sendelichtstrahl emittierenden Sendeelement und einem Empfangselement, wobei der Sendelichtstrahl mittels einer Ablenkeinheit periodisch über die Marken geführt wird und der von einer Marke reflektierte Empfangslichtstrahl eine durch den Kontrast der Marke aufgeprägte und vom räumlichen Intensitätsverlauf des Sendelichtstrahls abhängige Amplitudenmodulation aufweist, und wobei das Empfangslicht im Empfangselement in ein analoges Empfangssignal umgesetzt wird, dadurch gekennzeichnet, daß das analoge Empfangssignal in einem n-bit-Analog-Digitalwandler (15), dessen Wortbreite n größer als eins ist, in ein digitales Empfangssignal umgesetzt wird, welches einem digitalen Filter (16) mit mehreren Koeffizientensätzen zugeführt wird, wobei Mittel zum Umschalten zwischen den Koeffizientensätzen vorgesehen sind, und wobei die verschiedenen Koeffizientensätze des Filters (16) so gewählt sind, daß die Übertragungscharakteristiken des Filters (16) für die einzelnen Koeffizientensätze innerhalb eines vorgegebenen Toleranzbereichs den Inversen der Frequenzspektren der räumlichen Intensitätsverteilungen des Sendelichtstrahls (8) in verschiedenen Abständen von der Vorrichtung (1) entsprechen.

2. Vorrichtung nach Anspruch 1 dadurch gekennzeichnet, daß die Änderung der Koeffizientensätze des digitalen Filters (16) periodisch erfolgt, wobei die Umschaltfrequenz der Koeffizientensätze der Abtastrate der Ablenkeinheit (9) entspricht.

3. Vorrichtung nach Anspruch 1 oder 2, dadurch gekennzeichnet, daß dem digitalen Filter (16) in vorgegebenen Zeitintervallen nacheinander zwei unterschiedliche Koeffizientensätze zugewiesen sind.

4. Vorrichtung nach einem der Ansprüche 1 - 3, dadurch gekennzeichnet, daß das digitale Filter (16) von einem FIR-Filter 18. Grades mit Koeffizienten (hₘᵢ) gebildet ist, wobei jeder Koeffizient (hₘᵢ) einem bestimmten Zeitrang (i) zugeordnet ist.

5. Vorrichtung nach Anspruch 4, dadurch gekennzeichnet, daß jeder Koeffizient (hₘᵢ) eines Koeffizientensatzes in einem Speicherelement gespeichert ist, und daß die Ausgänge der Speicherelemente der Koeffizienten (hₘᵢ) von verschiedenen Koeffizientensätzen mit demselben Zeitrang (i) mit einem Schalter Sₘ verbunden sind, der auf einen Multiplizierer (X) des digitalen Filters (16) geführt ist.

6. Vorrichtung nach einem der Ansprüche 1 - 5, dadurch gekennzeichnet, daß für jeden Koeffizientensatz die Übertragungscharakteristik des digitalen Filters (16) innerhalb eines vorgegebenen Toleranzbereichs dem Inversen des Frequenzspektrums der räumlichen Intensitätsverteilung des Sendelichtstrahls (8) für einen vorgegebenen Bereich des Abstands von der Vorrichtung (1) entspricht.

7. Vorrichtung nach einem der Ansprüche 1 - 6, dadurch gekennzeichnet, daß für jeden Koeffizientensatz die Übertragungscharakteristik des digitalen Filters (16) zur Kompensation bauteilbedingter Störungen des Empfangssignals definierte Abweichungen vom Inversen des Frequenzspektrums der räumlichen Intensitätsverteilung des Sendelichtstrahls (8) aufweist, die den Umkehrfunktionen der Übertragungsfunktionen der Bauteile entsprechen.

8. Vorrichtung nach Anspruch 7, dadurch gekennzeichnet, daß das signalverzerrende Bauteil vom Empfangselement (4) gebildet ist.

9. Vorrichtung nach einem der Ansprüche 1 - 8, dadurch gekennzeichnet, daß die Wortbreite des n-bit Analog-Digitalwandlers (15) im Bereich 8 ≤ n ≤ 12 liegt.

## Claims

1. Opti-electronic device for the recognition of marks provided with defined contrast patterns, with a transmission element emitting a transmitted light beam and a reception element, wherein the transmitted light beam is guided periodically across the marks by means of a deflection unit and the received light beam reflected by a mark has an amplitude modulation imparted by the contrast of a mark and dependent on the spatial intensity of the transmitted light beam and wherein the received light is converted in the reception element into an analog reception signal, characterised in that the analog reception signal is converted in an n-bit analog-to-digital converter (15), the word width n of which is greater than one, into a digital reception signal which is fed to a digital filter (16) with several coefficient sets, wherein means are provided for switching over between the coefficient sets and wherein the different coefficient sets of the filter (16) are so chosen that the transmission characteristics of the filter (16) for the individual coefficient sets correspond within a preset tolerance range with the inverses of the frequency spectra of the spatial intensity distributions of the transmitted light beam (8) at different spacings from the device (1).

2. Device according to claim 1, characterised in that the change of the coefficient sets of the digital filter (16) takes place periodically, wherein the frequency of switching over the coefficient sets corresponds with the scanning rate of the deflecting unit (9).

3. Device according to claim 1 or 2, characterised in that two different coefficient sets are allotted one after the other to the digital filter (16) at preset intervals.

4. Device according to one of claims 1 to 3, characterised in that the digital filter (16) is formed by a FIR filter of 18^{th} degree with coefficients (hₘᵢ), wherein each coefficient (hₘᵢ) is assigned a certain time rank (i).

5. Device according to claim 4, characterised in that each coefficient (hₘᵢ) of a coefficient set is stored in a storage element and that the outputs of the storage elements of the coefficients (hₘᵢ) of different coefficient sets of the same time rank (i) are connected with a switch Sₘ, which is led to a multiplier (X) of the digital filter (16).

6. Device according to one of claims 1 to 5, characterised in that for each coefficient set, the transmission characteristic of the digital filter (16) corresponds within a preset tolerance range with the inverse of the frequency spectrum of the spatial intensity distribution of the transmitted light beam (8) for a preset range of the spacing from the device (1).

7. Device according to one of claims 1 to 6, characterised in that for each coefficient set, the transmission characteristic of the digital filter (16) has defined deviations from the inverse of the frequency spectrum of the spatial intensity distribution of the transmitted light beam (8), which correspond with the inverse functions of the components, for the compensation of disturbances of the received signal which are caused by the components.

8. Device according to claim 7, characterised in that the signal-distorting component is formed by the reception element (4).

9. Device according to one of claims 1 to 8, characterised in that the word width of the n-bit analog-to-digital converter (15) lies in the range of 8 ≤ n ≤ 12.

## Revendications

1. Dispositif optoélectronique pour la reconnaissance de marques pourvues de modèles de contraste définis, avec un élément émetteur émettant un rayon lumineux émetteur et un élément récepteur, le rayon lumineux émetteur étant périodiquement guidé sur les marques via une unité de déflexion et le rayon lumineux émetteur réfléchi par une marque présentant une modulation d'amplitude représentative du contraste de la marque et dépendant de l'évolution spatiale de l'intensité du rayon lumineux émetteur, et dans lequel la lumière de réception dans l'élément récepteur est convertie en un signal de réception analogique, caractérisé en ce que le signal de réception analogique est transformé en un signal de réception numérique dans un convertisseur analogique-numérique à n-binaires (15), dont la largeur de mot n est supérieure à un, lequel est amené avec plusieurs ensembles de coefficients à un filtre numérique (16), des moyens étant prévus pour la commutation entre les ensembles de coefficients, et les différents ensembles de coefficients du filtre (16) étant choisis de telle sorte que les caractéristiques de transmission du filtre (16) pour les ensembles de coefficients individuels, dans les limites d'une gamme de tolérances donnée, correspondent aux inverses des spectres de fréquences des répartitions spatiales d'intensité du rayon lumineux émetteur (8) à différentes distances du dispositif (1).

2. Dispositif selon la revendication 1, caractérisé en ce que la modification des ensembles de coefficients du filtre numérique (16) s'effectue périodiquement, la fréquence de commutation des ensembles de coefficients correspondant à la vitesse de balayage de l'unité de déflexion (9).

3. Dispositif selon la revendication 1 ou 2, caractérisé en ce que deux ensembles de coefficients différents sont associés successivement au filtre numérique (16) à des intervalles de temps prédéterminés.

4. Dispositif selon l'une des revendications 1 à 3, caractérisé en ce que le filtre numérique (16) est conçu sous forme d'un filtre FIR de catégorie 18 avec des coefficients (hₘᵢ), une catégorie temporelle précise (i) étant associée à chaque coefficient (hₘᵢ).

5. Dispositif selon la revendication 4, caractérisé en ce que chaque coefficient (hₘᵢ) d'un ensemble de coefficients est enregistré dans un élément de mémoire et en ce que les sorties des éléments de mémoire des coefficients (hₘᵢ) de différents ensembles de coefficients de même catégorie temporelle (i) sont reliées à un commutateur Sₘ, qui est relié à un multiplicateur (X) du filtre numérique (16).

6. Dispositif selon l'une des revendications 1 à 5, caractérisé en ce que, pour chaque ensemble de coefficients, la caractéristique de transmission du filtre numérique (16), dans les limites d'une gamme de tolérances donnée, correspond à l'inverse du spectre des fréquences de la répartition spatiale d'intensité du rayon lumineux émetteur (8) pour une gamme prédéterminée de distances du dispositif (1).

7. Dispositif selon l'une des revendications 1 à 6, caractérisé en ce que, pour chaque ensemble de coefficients, la caractéristique de transmission du filtre numérique (16) pour compenser les perturbations induites par les composants du signal de réception, présente des écarts définis par rapport à l'inverse du spectre des fréquences de la répartition spatiale d'intensité du rayon lumineux émetteur (8), qui correspondent aux fonctions inverses des fonctions de transmission des composants.

8. Dispositif selon la revendication 7, caractérisé en ce que le composant à l'origine de la perturbation des signaux est formé de l'élément récepteur (4).

9. Dispositif selon l'une des revendications 1 à 8, caractérisé en ce que la largeur de mot du convertisseur analogique-numérique à n-binaires (15) est comprise dans la gamme de 8 ≤ n ≤ 12.
